# EUROPEAN PATENT APPLICATION

(11) **EP 3 650 216 A1**
(43) Date of publication of application: **13.05.2020**
(21) Application number: 18827725.5
(22) Date of filing: 03.07.2018
(51) Int. Cl.: B32B 27/12, B32B 27/40, F16F 7/00, B62D 29/04

(54) **COMPOSITE MATERIAL AND COMPOSITE MATERIAL MANUFACTURING METHOD**

(30) Priority: 04.07.2017 JP 2017131382
(71) Applicant: Spiber Inc., Tsuruoka-shi, Yamagata 997-0052 (JP); Kojima Industries Corporation, Toyota-shi, Aichi 471-8588 (JP)
(72) Inventor: UCHIDA, Kazuhiro, Toyota-shi Aichi 470-0373 (JP); ASAKAWA, Masahiro, Toyota-shi Aichi 470-0373 (JP); MORI, Hiroyuki, Toyota-shi Aichi 470-0373 (JP); ISHIDA, Wataru, Toyota-shi Aichi 470-0373 (JP); UEDA, Shinya, Toyota-shi Aichi 471-8588 (JP)
(74) Representative: Handley, Matthew Edward
(86) International application number: PCT/JP2018/025259
(87) International publication number: WO 2019/009302

(57) **Abstract**

A composite material 100 is obtained by laminating and tightly adhering a fabric 60 containing fibers made of spider silk fibroin and a synthetic resin film 50 having a tensile elongation equal to or greater than that of the fabric 60.

## Description

### Technical Field

The present invention relates to a composite material and a composite material manufacturing method.

### Background Art

An impact absorption member that absorbs impact energy used in a vehicle and the like is examined. For example, an impact absorption member disclosed in Patent Document 1 is formed of a carbon fiber-reinforced plastic and the like, and is constituted of a plurality of ribs combined in a grid shape. In the impact absorption member, impact is absorbed by a structure in a three-dimensional shape being broken. On the other hand, a composite material obtained by using a fiber-reinforced resin is known. For example, an internal pressure container and a binding tool disclosed in Patent Document 2 are formed of a discontinuous fiber-reinforced resin composite material, and as a reinforced fiber, a carbon fiber or a glass fiber is used.

### Citation List

### Patent Literature

[Patent Document 1] Japanese Unexamined Patent Application, First Publication No. 2017-019428
[Patent Document 2] Japanese Unexamined Patent Application, First Publication No. 2001-074199

### Summary of Invention

### Technical Problem

In the impact absorption member disclosed in Patent Document 1, the member has a three-dimensional shape to increase impact absorption energy, but a structural member in a three-dimensional shape becomes large and heavy. In order to make a member small and light and to increase the impact absorption energy, there is used means for employing a fiber-reinforced resin such as the structural member of Patent Document 2. However, such a fiber-reinforced resin has high intensity but has a small deformation amount until it reaches breaking (refer to a figure of stress strain characteristic of Patent Document 2). Therefore, the fiber-reinforced resin was not sufficient as an impact absorption member.

An object of the present invention is to provide a composite material and a composite material manufacturing method capable of obtaining a desired stress strain characteristic as an impact absorption member.

### Solution to Problem

A composite material according to an aspect of the present invention is obtained by layering and tightly adhering a fabric containing fibers made of spider silk fibroin and a synthetic resin film/sheet having a tensile elongation equal to or greater than that of the fabric.

In the method of producing a composite material according to another aspect of the present invention, a fabric containing fibers made of spider silk fibroin and a synthetic resin film/sheet having a tensile elongation equal to or greater than that of the fabric are laminated, and the laminate is heated and pressurized to tightly adhere the fabric and the synthetic resin film/sheet.

According to the composite material and the composite material manufacturing method, a fiber made of spider silk fibroin is used in the fabric. The fabric and the synthetic resin film/sheet having a tensile elongation equal to or greater than the tensile elongation of the fabric are laminated, and the laminate is tightly adhered. By the structure and the manufacturing method, it is possible to obtain a more desired stress strain characteristic as an impact absorption member, compared to the stress strain characteristic of a member in a related art. The "synthetic resin film/sheet" means a synthetic resin film or a synthetic resin sheet.

In the composite material and the composite material manufacturing method, the synthetic resin film/sheet may be made of thermoplastic polyurethane.

In the composite material and the composite material manufacturing method, the fabric may be a woven fabric.

### Effects of Invention

According to the present invention, it is possible to obtain a desired stress strain characteristic as an impact absorption member.

### Brief Description of Drawings

Fig. 1 is a sectional view illustrating a composite material according to an embodiment of the present invention.
Fig. 2 is an explanation view schematically illustrating an example of a spinning device for manufacturing a natural spider silk fibroin fiber or an artificial spider silk fibroin fiber.
Fig. 3 is a view schematically illustrating a manufacturing procedure of a composite material.
Fig. 4 is a view illustrating stress strain characteristics in examples and comparative examples.

### Description of Embodiments

Hereinafter, embodiments of the present invention will be explained referring to drawings. The present invention is not limited to the following embodiments.

### (Composite material)

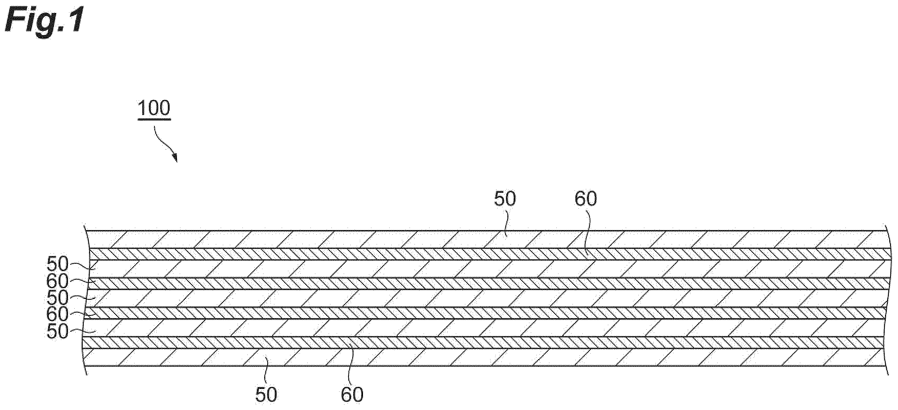

First, a composite material of the present embodiment will be explained. As illustrated in Fig. 1, a composite material 100 has a structure in which a synthetic resin film 50 and a fabric 60 which is a cloth containing a fiber made of spider silk fibroin are alternately laminated and tightly adhered, for example. The synthetic resin film 50 and the fabric 60 are heated and pressurized, and tightly adhered to each other. For example, the synthetic resin film 50 is melt by heating a laminate between the synthetic resin film 50 and the fabric 60, and a portion of the melt synthetic resin film 50 is impregnated in the fabric 60 by pressurizing a laminate thereof. For example, by the melting and the impregnation, a state in which the synthetic resin film 60 and the fabric 60 are tightly adhered is obtained. A front surface and a back surface of the composite material 100 may be the synthetic resin film 50, but is not limited thereto. The fabric 60 may be exposed onto the front surface and the back surface of the composite material 100. In addition, the synthetic resin film 50 and the fabric 60 are not necessarily required to be alternately laminated, and any one layer may be consecutively laminated.

The synthetic resin film 50 may be a synthetic resin sheet. The synthetic resin film and the synthetic resin sheet have different thicknesses. The synthetic resin film has a plate shape thinner than a predetermined thickness (for example, 0.2 to 0.25 mm), and the synthetic resin sheet has a plate shape thinner than a predetermined thickness (for example, 0.2 to 0.25 mm). The synthetic resin film/sheet is preferably a thermoplastic polyurethane (TPU) film/sheet. The fabric is preferably a woven fabric.

The tensile elongation of the synthetic resin film 50is equal to the tensile elongation of the fabric 60, or is greater than the tensile elongation of the fabric 60. The tensile elongation is an elongation percentage (%) at the time when an end of a film or sheet is fixed and the other end of the film or sheet is elongated and cut. A load at the time when the film or sheet is cut is referred to as tensile strength. The tensile elongation is an elongation percentage (%) of the film or sheet at the time when the load corresponding to the tensile strength is applied to the film or sheet.

Each thickness of the synthetic resin film 50 and the fabric 60 is appropriately set. The thickness of the synthetic resin film 50 and the thickness of the fabric 60 may be equal to each other, or the synthetic resin film 50 may be thicker than the fabric 60. The composite material 100 made of a laminate between the synthetic resin film 50 and the fabric 60 is formed in an appropriate shape as an impact absorption member (structural member), for example, and is applied to a mobile body such as a vehicle, for example. The composite material 100 is formed by a known forming method. In a formed state, a section in which the synthetic resin film 50 and the fabric 60 are laminated may be exposed. Usage of the composite material 100 is not limited to the mobile body such as a vehicle.

### (Spider silk fibroin fiber)

The spider silk fibroin may contain a spider silk polypeptide selected from the group consisting of a natural spider silk protein and a polypeptide (artificial spider silk protein) derived from a natural spider silk protein.

Examples of the natural spider silk protein include large sphincter bookmark protein, weft protein, and small bottle-like gland protein. Since the large sphincter bookmark has a repetitive region including a crystal region and a non-crystal region (also referred to as amorphous region), it has both high stress and stretchability. The spider silk weft has properties of not having a crystal region, and having a repetitive region including a non-crystal region. The weft is inferior in stress compared to the large sphincter bookmark protein, but has high stretchability.

The large sphincter bookmark protein has properties of being produced in the large bottle-like gland of a spider and being excellent in toughness. Examples of the large sphincter bookmark protein include large bottle-like gland spidroin MaSp1 and MaSp2 derived from an American silk spider (Nephila clavipes), and ADF3 and ADF4 derived from a garden spider (Araneus diadematus). The ADF3 is one of two main silk proteins of a garden spider. The polypeptide derived from a natural spider silk protein may be a polypeptide derived from the bookmark silk protein. The polypeptide derived from ADF3 is relatively easily synthesized and has properties excellent in degree of strength and toughness.

The weft protein is produced in a flagellar gland (flagelliform gland) of a spider. Examples of the weft protein include a flagellar silk protein (flagelliform silk protein) derived from an American silk spider (Nephila clavipes).

The polypeptide derived from a natural spider silk protein may be a recombination spider silk protein. Examples of the recombination spider silk protein include a variant, an analog, or a derivative of the natural spider silk protein. An appropriate example of such a polypeptide is a recombination spider silk protein of a large sphincter bookmark protein (referred to as "polypeptide derived from large sphincter bookmark protein").

Examples of the protein derived from a large sphincter bookmark which is a fibroin-like protein include a protein consisting of a domain sequence represented by Formula 1: [(A) n motif-REP]m. Here, in Formula 1, (A) n motif represents an amino acid sequence mainly consisting of an alanine residue, and n may be an integer of 2 to 20, preferably 4 to 20, more preferably 8 to 20, further more preferably 10 to 20, even more preferably 4 to 16, even further more preferably 8 to 16, and particularly preferably 10 to 16. In addition, a proportion of the number of alanine residues to the number of all amino acid residues in n motif may be equal to or more than 40%, preferably equal to or more than 60%, more preferably equal to or more than 70%, further more preferably equal to or more than 80%, even further more preferably equal to or more than 90%, and 100% (meaning constituted of only alanine residues). REP represents an amino acid sequence consisting of 2 to 200 amino acid residues. m represents an integer of 2 to 300. (A) n motif present in multiple numbers may be identical amino acid sequences to each other, or may be different amino acid sequences. REP present in multiple numbers may be identical amino acid sequences to each other, or may be different amino acid sequences. Specific examples of a protein derived from a large sphincter bookmark include a protein consisting of an amino acid sequence represented by SEQ ID NO: 1 and SEQ ID NO: 2.

Examples of a protein derived from a weft protein represents include a protein consisting of a domain sequence represented by Formula 2: [REP2]o (here, in Formula 2, REP2 represents an amino acid sequence consisting of Gly-Pro-Gly-Gly-X, X represents an amino acid selected from the group consisting of alanine (Ala), serine (Ser), tyrosine (Tyr), and valine (Val), and o represents an integer of 8 to 300). Specific examples of the protein include a protein consisting of an amino acid sequence represented by SEQ ID NO: 3. The amino acid sequence represented by SEQ ID NO: 3 is an amino acid sequence in which an amino acid sequence (indicated as PR1 sequence) from residue 1220 to residue 1659 from an N terminal corresponding to a repeat moiety and motif of a partial sequence (NCBI accession No.: AAF36090, GI: 7106224) of a flagellar silk protein of an American silk spider acquired from NCBI database binds to a C terminal amino acid sequence from residue 816 to residue 907 from a C terminal of a partial sequence (NCBI accession No.: AAC38847, GI: 2833649) of a flagellar silk protein of an American silk spider acquired from NCBI database, and an amino acid sequence (tag sequence and hinge sequence) represented by SEQ ID NO: 4 is added to an N terminal of the bound sequence.

A protein included as a main component in a fiber made of spider silk fibroin, that is, a spider silk fibroin fiber, can be produced by expressing a nucleic acid by a host transformed with an expression vector consisting of a nucleic acid sequence encoding the protein and one or a plurality of regulatory sequences operably linked to the nucleic acid sequence.

A method of manufacturing a nucleic acid encoding a protein included as a main component in a spider silk fibroin fiber is not particularly limited. For example, it is possible to manufacture the nucleic acid by an amplification cloning method such as polymerase chain reaction (PCR) or a chemical synthesis method using a gene encoding a natural structural protein. The chemical synthesis method of a nucleic acid is not particularly limited, and it is possible to chemically synthesize a gene by a method of linking an oligonucleotide automatically synthesized by AKTA oligopilot plus 10/100 (GE Healthcare Japan Corporation) and the like, by PCR and the like, with amino acid sequence information of a structural protein acquired by NCBI web database and the like, for example. At this time, in order to facilitate purification and/or checking of a protein, a nucleic acid encoding a protein consisting of an amino acid sequence in which an amino acid sequence consisting of an initiation codon and a His 10 tag are added to the N terminal of the amino acid sequence may be synthesized.

The regulatory sequence is a sequence of controlling expression of a recombination protein in a host (for example, promoter, enhancer, liposome binding sequence, transcription termination sequence, and the like), and can be appropriately selected depending on the kind of the host. As the promoter, an inducible promoter functioning in a host cell and capable of inducing expression of a target protein may be used. The inducible promoter is a promoter capable of controlling transcription due to presence of inducing substances (expression inducer), absence of repressor molecule, or physical factors such as temperature and increase or decrease of osmotic pressure or pH value.

The kind of the expression vector can be appropriately selected depending on the kind of a host, such as plasmid vector, virus vector, cosmid vector, fosmid vector, and artificial chromosome vector. As the expression vector, an expression vector that can replicate autonomously in the host cell or can be integrated into the host chromosome and contains a promoter at a position where the nucleic acid encoding the target protein can be transcribed is preferably used.

As the host, any one of a prokaryote and a eukaryote such as yeast, filamentous fungus, insect cell, animal cell, and plant cell can be appropriately used.

Preferable examples of the host of the prokaryote include bacteria that belong to genus Escherichia, genus Brevibacillus, genus Serratia, genus Bacillus, genus Microbacterium, genus Brevibacterium, genus Corynebacterium, and genus Pseudomonas. Examples of microorganisms that belong to genus Escherichia include Escherichia coli and the like. Examples of microorganisms that belong to genus Brevibacillus include Brevibacillus agri and the like. Examples of microorganisms that belong to genus Serratia include Serratia liquefaciens and the like. Examples of microorganisms that belong to genus Bacillus include Bacillus subtilis and the like. Examples of microorganisms that belong to genus Microbacterium include Microbacterium ammoniaphilum and the like. Examples of microorganisms that belong to genus Brevibacterium include Brevibacterium divaricatum and the like. Examples of microorganisms that belong to Corynebacterium include Corynebacterium ammonia genes and the like. Examples of microorganisms that belong to Pseudomonas include Pseudomonas putida and the like.

In a case where the prokaryote is set as a host, examples of the vector into which a nucleic acid encoding a target protein is introduced include pBTrp2 (manufactured by Boehringer Mannheim Corporation), pGEX (manufactured by Pharmacia Corporation), pUC18, pBluescriptII, pSupex, pET22b, pCold, pUB110, and pNCO2 (Japanese Unexamined Patent Publication No. 2002-238569).

Examples of the host of the eukaryote include yeast and filamentous fungus (mold and the like). Examples of the yeast include yeast that belongs to genus Saccharomyces, genus Pichia, genus Schizosaccharomyces, and the like. Examples of the filamentous fungus include a filamentous fungus that belongs to genus Aspergillus, genus Penicillium, and genus Trichoderma.

In a case where the eukaryote is set as a host, examples of a vector to which a nucleic acid encoding a target protein is introduced include YEP13 (ATCC37115), YEp24 (ATCC37051), and the like. As a method of introducing an expression vector into the host cell, any method can be used as long as the method is a method of introducing DNA into the host cell. For example, a method of using a calcium ion [Proc. Natl. Acad. Sci. USA, 69, 2110 (1972)], an electroporation method, a spheroplast method, a protoplast method, a lithium acetate method, a competent method, and the like can be exemplified.

As a method of expressing a nucleic acid by a host transformed with an expression vector, in addition to direct expression, secretory production, fusion protein expression, and the like can be performed according to a method described in Molecular Cloning, Second Edition.

It is possible to manufacture a protein by culturing a host transformed with an expression vector in a culture medium, producing and accumulating the protein in the culture medium, and collecting the protein from the culture medium. The method of culturing a host in a culture medium can be performed by a method generally used in culturing of a host.

In a case where the host is a prokaryote such as Escherichia coli or a eukaryote such as yeast, as a culture medium, any one of a natural medium and a synthetic medium may be used as long as the culture medium contains a carbon source obtained by assimilating a host, nitrogen source, inorganic salts, and the like and efficiently performs culturing of a host.

As the carbon source, any carbon source may be used as long as the transformed microorganism can be assimilated, and it is possible to use glucose, fructose, sucrose, and molasses containing thereof, carbohydrate such as starch and starch hydrolysate, organic acid such as acetic acid and propionic acid, and alcohols such as ethanol and propanol, for example. As the nitrogen source, it is possible to use ammonia, ammonia salts of an inorganic acid or organic acid such as ammonium chloride, ammonium sulfate, ammonium acetate, and ammonium phosphate, other nitrogen-containing compounds, peptone, meat extract, yeast extract, corn steep liquor, casein hydrolysate, soybean meal and soybean meal hydrolysate, and various fermented fungus bodies and digests thereof, for example. As the inorganic salts, it is possible to use primary potassium phosphate, secondary potassium phosphate, magnesium phosphate, magnesium sulfate, sodium chloride, ferrous sulfate, manganese sulfate, copper sulfate, and calcium carbonate, for example.

Culturing of a prokaryote such as Escherichia coli or a eukaryote such as yeast can be performed under an aerobic condition such as shaking culture or deep aeration and agitation culture, for example. A culturing temperature is 15°C to 40°C, for example. A culturing time is generally 16 hours to 7 days. A pH of a culture medium during culturing is preferably maintained to be 3.0 to 9.0. Adjustment of the pH of the culture medium can be performed by using an inorganic acid, an organic acid, an alkali solution, urea, calcium carbonate, and ammonia.

In addition, during culturing, an antibiotic such as ampicillin and tetracycline may be added to the culture medium depending on the necessity. When culturing microorganisms transformed with an expression vector obtained by using an inducible promoter as a promoter, an inducer may be added to a medium depending on the necessity. For example, when culturing microorganisms transformed with an expression vector obtained by using a lac promoter, isopropyl-β-D-thiogalactopyranoside and the like may be added to the medium, and when culturing microorganisms transformed with an expression vector obtained by using a trp promoter, indoleacrylic acid and the like may be added to the medium.

Isolation and purification of the expressed protein can be performed by a generally used method. For example, in a case where the protein is expressed in a dissolved state in a cell, after finishing culturing, a host cell is recovered by centrifugation, suspended in an aqueous buffer, and crushed by an ultrasonic wave crusher, a French press, a manton gaulin homogenizer, and a dino mill to obtain a cell-free extract. It is possible to obtain a purified sample by using a method generally used in isolation and purification of a protein from a supernatant obtained by centrifugation of the cell-free extract, that is, a solvent extraction method, a salting-out method by ammonium sulphate, a desalination method, a precipitation method by an organic solvent, a negative ion exchange chromatography method using a resin such as diethylaminoethyl (DEAF)-sepharose, DIAION HPA-75 (manufactured by Mitsubishi Chemical Corporation), and the like, a positive ion exchange chromatography method using a resin such as S-Sepharose FF (manufactured by Pharmacia Corporation), a hydrophobic chromatography method using a resin such as butyl sepharose, phenyl sepharose, and the like, a gel filtration method using a molecular sieve, an affinity chromatography method, a chromatofocusing method, an electrophoresis method using isoelectric focusing phoresis and the like, and the like alone or in combination.

In addition, in a case where a protein is expressed by forming an insoluble body in a cell, a host cell is similarly recovered, crushed, and subjected to centrifugation, and thereby an insoluble body of the protein is recovered as a precipitation fraction. The insoluble body of the recovered protein can be solubilized with a protein denaturant. After the operation, it is possible to obtain a purified sample of a protein by the same isolation and purification method. In a case where the protein is secreted outside the cell, it is possible to recover the protein from the culture supernatant. That is, it is possible to obtain a purified sample by acquiring a culture supernatant by treating a culture product by a technique of centrifugation and the like, and using the same isolation and purification method from the culture supernatant.

The spider silk fibroin fiber is spun from the above-described protein. The spider silk fibroin fiber is preferably obtained by spinning a polypeptide (artificial spider silk protein) derived from a natural spider silk protein. It is possible to manufacture the spider silk fibroin fiber by a known spinning method. That is, when manufacturing a spider silk fibroin fiber, for example, first, a spider silk fibroin manufactured according to the above-described method is added to a solvent such as dimethyl sulfoxide (DMSO), N,N-dimethyl formamide (DMF), hexafluoroisopronol (HFIP), or the like along with an inorganic salt as a dissolution promoting agent to prepare a dissolved dope solution. Subsequently, it is possible to obtain a target spider silk fibroin fiber by spinning by a known spinning method such as wet spinning, dry spinning, and dry wet spinning by using the dope solution.

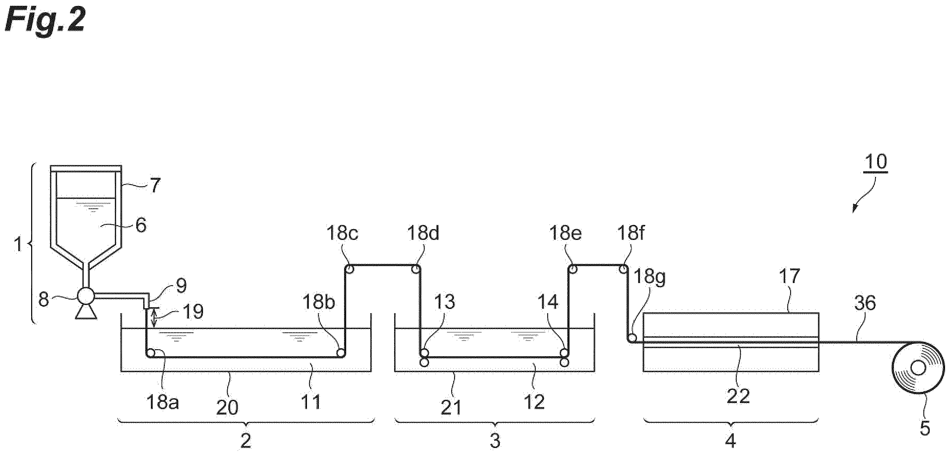

Fig. 2 is a schematic view illustrating an example of a spinning device for manufacturing a spider silk fibroin fiber. A spinning device 10 illustrated in Fig. 2 is an example of a spinning device for dry wet spinning, and has an extrusion device 1, a coagulation bath 20, a washing bath 21, and a drying device 4 in order from an upstream side.

The extrusion device 1 has a storage tank 7, and a dope solution (spinning source solution) 6 is stored here. A coagulation solution 11 (for example, methanol) is stored in the coagulation bath 20. The dope solution 6 is discharged from a nozzle 9 provided by opening an air gap 19 between the coagulation solution 11 by a gear pump 8 attached on a lower end portion of the storage tank 7. The extracted dope solution 6 is supplied to the coagulation solution 11 via the air gap 19. A solvent is removed from the dope solution 6 in the coagulation solution 11, and a protein is coagulated. The coagulated protein is introduced into the washing bath 21, washed with a washing solution 12 in the washing bath 21, and then transmitted to a drying device 4 by a first nip roller 13 and a second nip roller 14 installed in the washing bath 21. At this time, for example, when a rotation rate of the second nip roller 14 is set to be faster than a rotation rate of the first nip roller 13, a spider silk fibroin fiber 36 stretched at a magnification depending on the rotation rate ratio is obtained. The spider silk fibroin fiber stretched in the washing solution 12 is released from the inside of the washing bath 21, dried at the time of passing through the inside of the drying device 4, and thereafter, wound in a winder. In this manner, the spider silk fibroin fiber is obtained as a wound product 5, which is finally wound by a winder, by the spinning device 10. 18a to 18g are silk guides.

The coagulation solution 11 may be any solution as long as the solution is a solution capable of being desolventized, and examples thereof include lower alcohol having 1 to 5 carbon atoms such as methanol, ethanol, and 2-propanol, acetone, and the like. The coagulation solution 11 may contain appropriate water. A temperature of the coagulation solution 11 is preferably 0°C to 30°C. A distance of the coagulated protein passing through the coagulation solution 11 (substantially, distance from a silk guide 18a to a silk guide 18b) may be any distance as long as the distance is a length at which desolventizing is efficiently performed, and is 200 to 500 mm, for example. A detention time in the coagulation solution 11 may be 0.01 to 3 minutes, and is preferably 0.05 to 0.15 minutes, for example. In addition, stretching (pre-stretching) in the coagulation solution 11 may be performed.

Stretching performed in the washing bath 21 when obtaining the spider silk fibroin fiber performed in warm water, in a solution obtained by adding an organic solvent to the warm water, and the like, and so-called wet heat stretching may be performed. A temperature of the wet heat stretching may be 50°C to 90°C, for example, and is preferably 75°C to 85°C, for example. In wet heat stretching, unstretched silk (or pre-stretched silk) can be stretched at 1 to 10 times, and is preferably stretched at 2 to 8 times, for example.

A lower limit value of final stretching magnification is preferably any of more than 1 time, equal to or more than 2 times, equal to or more than 3 times, equal to or more than 4 times, equal to or more than 5 times, equal to or more than 6 times, equal to or more than 7 times, equal to or more than 8 times, and equal to or more than 9 times, and an upper limit value thereof is preferably equal to or less than 40 times, equal to or less than 30 times, equal to or less than 20 times, equal to or less than 15 times, equal to or less than 14 times, equal to or less than 13 times, equal to or less than 12 times, equal to or less than 11 times, and equal to or less than 10 times, to the unstretched silk (or pre-stretched silk).

### (Fabric)

The spider silk fibroin fiber used in manufacturing of a fabric including a spider silk fibroin fiber may be a short fiber, or may be a long fiber. The spider silk fibroin fiber may be used alone, or may be used in combination with other fibers. That is, when manufacturing a fabric, as a raw material silk, either of a single silk made of only a spider silk fibroin fiber and a composite silk obtained by combining a spider silk fibroin fiber and other fibers may be sued alone. Or, as a raw material silk, the single silk and the composite silk may be used by being combined with each other. Other fibers refer to fibers not containing a protein and the like. The single silk includes a twisted silk, a non-twisted silk, and the like. The single silk is preferably a twisted silk, and in this case, the twisted silk may be a Z-twisted silk, or may be an S-twisted silk. The composite silk includes a blended silk, a mixed silk, a covering silk, and the like.

The kind of the fabric is not particularly limited. For example, a fabric may be a woven product or a knitted product, or may be a non-woven fabric. The fabric is preferably a woven fabric. In a case where the fabric is a woven fabric, the woven structure may be a plain weave, a twill weave, a satin weave, or the like, for example. The kind of the used silk may be one kind, or may be plural kinds. In a case where the fabric is a knitted product, the knitted product may be a warp knitted product such as tricot and russell, or may be a weft knitted product such as a flat knit and a circular knit. The kind of the used silk may be one kind, or may be plural kinds.

As a method of preparing a fabric made of a spider silk fibroin fiber, a known method can be used. The method of preparing a fabric made of a spider silk fibroin fiber is not particularly limited. The fabric is prepared by a known loom or knitting device. In a case where the fabric is a non-woven fabric, the fabric is prepared by a known technique such as a needle punch method.

### (Synthetic resin film/sheet)

In the above-described composite material 100, a synthetic resin film 50 is used. In a case where a thermoplastic polyurethane film is used in the synthetic resin film 50, thermoplastic polyurethane having a tensile elongation equivalent to or more than that of the spider silk fibroin fiber is used. The thermoplastic polyurethane may be a polyester-based thermoplastic polyurethane elastomer, may be a polyether-based thermoplastic polyurethane elastomer, or may be other kinds. In the composite material, a synthetic resin film/sheet other than the synthetic resin film 50 may be used. As long as it is a synthetic resin film/sheet having a tensile elongation equivalent to or greater than the tensile elongation of the fabric, other materials may be used. For example, the synthetic resin film/sheet may be curable polyurethane having high elongation.

### (Composite material manufacturing method)

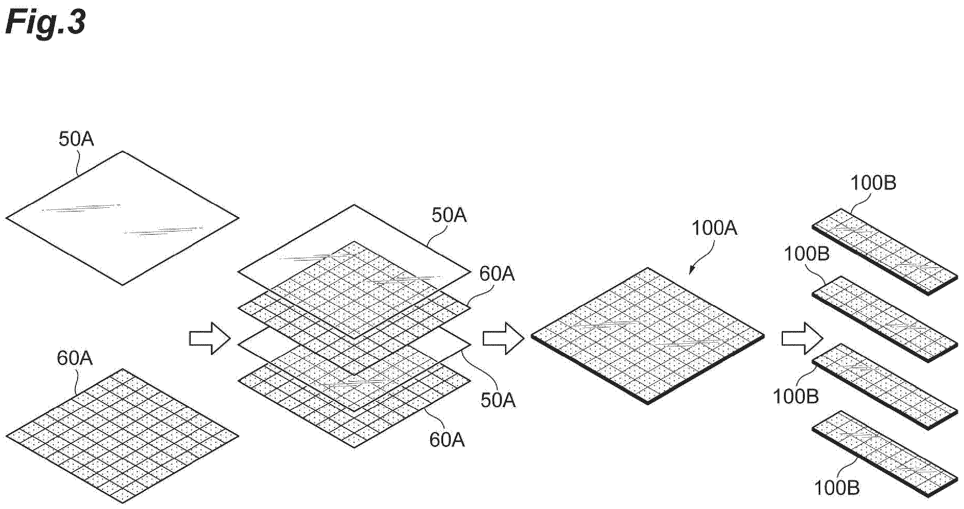

A method of manufacturing a composite material 100 of the present embodiment will be described. Fig. 3 is a view schematically illustrating a manufacturing procedure of a composite material. As illustrated in Fig. 3, first, a plurality of synthetic resin films 50A and a plurality of fabrics 60A are used. The synthetic resin films 50A and the fabrics 60A are processed in a film shape or a sheet shape in advance. The synthetic resin films 50A and the fabrics 60A are alternately laminated to obtain a laminate 100A. The laminate 100A is heated and pressurized (heating compression). In the heating and pressurizing step, a known press machine is used. Thereafter, the laminate 100A is radiantly cooled (cooling) to obtain a composite material 100 of the present embodiment. The composite material 100 is formed by a known forming method.

The composite material manufacturing method employs various deformation aspects. For example, in a state where a fabric is set into a mold in advance, a fabric and a synthetic resin film/sheet may be laminated by insert forming/in-mold forming that forms a synthetic resin. In addition, a fabric and a synthetic resin film/sheet may be laminated by coating process that continuously applies a synthetic resin onto a long fabric. In the coating process, a synthetic resin solution is supplied onto an upper surface of a fabric (fiber base) traveling a roll, and a synthetic resin is applied while adjusting an applying amount with a doctor blade and the like.

According to the composite material and the composite material manufacturing method of the present embodiment, a fiber made of natural spider silk fibroin or a fiber made of artificial spider silk fibroin derived from natural spider silk fibroin is used for the fabric. The fabric, and the synthetic resin film/sheet having a tensile elongation equivalent to or greater than the tensile elongation of the fabric are laminated, and tightly adhered to each other. By the manufacturing and the manufacturing method, it is possible to obtain more desirable stress strain characteristic as an impact absorption member, compared to the stress strain characteristic of a member in the related art.

In the present specification, the desirable stress strain characteristic means that stress in the vicinity of strain of 0 reaches a maximum value, and then the stress is maintained until reaching a breaking point, that is, the waveform is rectangular. In general, a deformation amount (strain) allowed in an impact absorption material and an upper limit of the maximum stress (how much stress can be applied to the counterpart) are determined by the installation location of the impact absorption material. For example, the impact absorption material is designed to have a characteristic capable of absorbing as much energy as possible within a range of the allowed deformation amount and the upper limit of the maximum stress.

### Example

Hereinafter, the present invention will be described in detail based on Example. Here, the present invention is not limited to the following Example.

### [Manufacturing of spider silk fibroin fiber]

### <(1) Manufacturing of spider silk fibroin (PRT799)>

### (Synthesis of gene encoding spider silk fibroin and construction of expression vector)

A modified fibroin (hereinafter, referred to as "PRT799") consisting of an amino acid sequence represented by SEQ ID NO: 2 was designed based on a base sequence and an amino acid sequence of fibroin (GenBank accession No: P46804. 1, GI: 1174415) derived from Nephila clavipes.

The amino acid sequence represented by SEQ ID NO: 2 has an amino acid sequence in which substitution, insertion, and deletion of an amino acid residue for the purpose of improving productivity have been performed on the amino acid sequence of the fibroin derived from Nephila clavipes, and is obtained by adding an amino acid sequence (tag sequence and hinge sequence) represented by SEQ ID NO: 4 to an N terminal.

Subsequently, a nucleic acid encoding PRT799 was synthesized. In the nucleic acid, a NdeI site was added to a 5' terminal and an EcoRI site was added to a termination codon downstream. The nucleic acid was cloned with a cloning vector (pUC118). Thereafter, the nucleic acid was subjected to restriction enzyme processing at NdeI and EcoRI and cut out, and then recombinated to a protein expression vector pET-22b (+) to obtain an expression vector.

Escherichia coli BLR (DE3) was transformed with the pET22b (+) expression vector including a nucleic acid encoding PRT799. The transformed Escherichia coli was cultured in a 2 mL LB medium including ampicillin for 15 hours. The culture solution was added to a 100 mL seed culture medium including ampicillin (Table 1) such that OD600 was 0.005. The culturing temperature was maintained at 30°C, and flask culturing was performed until OD600 reached 5 (approximately 15 hours) to obtain a seed culture solution.

**[Table 1]**

| Seed culture medium | |
|---|---|
| Sample | Concentration (g/L) |
| Glucose | 5.0 |
| KH₂PO₄ | 4.0 |
| K₂HPO₄ | 9.3 |
| Yeast Extract | 6.0 |
| Ampicillin | 0.1 |

The seed culture solution was added to a jar fermenter added with a 500 ml production medium (Table 2 below) such that OD600 was 0.05. The culture solution temperature was maintained at 37°C, and culturing was performed by constantly controlling thereof at pH 6.9. In addition, a dissolved oxygen concentration in the culture solution was set to be maintained at 20% of a dissolved oxygen saturation concentration.

**[Table 2]**

| Production medium | |
|---|---|
| Sample | Concentration (g/L) |
| Glucose | 12.0 |
| KH₂PO₄ | 9.0 |
| MgSO₄·7H₂O | 2.4 |
| Yeast Extract | 15 |
| FeSO₄·7H₂O | 0.04 |
| MnSO₄·5H₂O | 0.04 |
| CaCl₂·2H₂O | 0.04 |
| Adekanol (Adeka, LG-295S) | 0.1 (mL/L) |

Immediately after glucose in the production medium was completely consumed, a feed solution (glucose 455 g/1 L, Yeast Extract 120 g/1 L) was added at a rate of 1 mL/minute. The culture solution temperature was maintained at 37°C, and culturing was performed by constantly controlling thereof at pH 6.9. In addition, culturing was performed for 20 hours such that a dissolved oxygen concentration in the culture solution was set to be maintained at 20% of a dissolved oxygen saturation concentration. Thereafter, 1 M of isopropyl-β-thiogalactopyranoside (IPTG) was added to the culture solution such that the final concentration was 1 mM, and expression of PRT799 was induced. At a point of passing 20 hours after the addition of IPTG; the culture solution was centrifuged, and cells were recovered. SDS-PAGE was performed by using fungus bodies prepared from the culture solution before the addition of IPTG and the culture solution after the addition of IPTC; and expression of PRT799 was checked from expression of a band with a size corresponding to that of PRT799 dependent on the addition of IPTG

### (Purification of PRT799)

The fungus bodies recovered 2 hours after the addition of IPTG were washed with a 20-mM Tris-HCl buffer (pH 7.4). The washed fungus bodies were suspended in a 20-mM Tris-HCl buffer (pH 7.4) including approximately 1-mM PMSF, and cells were crushed in a high-pressure homogenizer (GEA Niro Soavi Corporation). The crushed cells were centrifuged to obtain a precipitate. The obtained precipitate was washed with a 20-nuM Tris-HCl buffer (pH 7.4) until reaching high purity. The washed precipitate was suspended in an 8-M guanidine buffer (8-M guanidine hydrochloride, 10-mM sodium dihydrogen phosphate, 20-mM NaCl, and 1-mM Tris-HCl, pH 7.0) such that the precipitate reached a concentration of 100 mg/mL, stirred using a stirrer at 60°C for 30 minutes, and dissolved. After dissolution, the resultant product was dialyzed with water by using a dialysis tube (cellulose tube 36/32 manufactured by Sanko Junyaku Co., Ltd.). A white coagulation protein (PRT799) obtained after dialysis was recovered by centrifugation, moisture was removed in a freeze-dryer, and freeze-dried powders were recovered.

A purification degree of PRT799 in the obtained freeze-dried powders was checked by performing image analysis on the result of polyacrylamide gel electrophoresis of powders using Totallab (nonlinear dynamics ltd.). As a result, the purification degree of PRT799 was approximately 85%.

### <(2) Manufacturing of spider silk fibroin fiber> (preparation of dope solution)

After adding the above-described spider silk fibroin (PRT799) to dimethyl sulfoxide (DMSO) so as to be a concentration of 24 mass%, LiCl was added thereto at a concentration of 4.0 mass% as a dissolution promoting agent, and then dissolved for 3 hours by using a shaker. Thereafter, dust and bubbles were removed to obtain a dope solution. A solution viscosity of the dope solution was 5000 cP (centipoise) at 90°C.

### (Spinning)

The dope solution obtained as described above was subjected to known dry wet spinning by using the spinning device 10 illustrated in Fig. 2 to obtain a monofilament of spider silk fibroin. Here, the dry wet spinning was performed under the following condition.
Extrusion nozzle diameter: 0.1 mm
Extrusion rate: 327.6 ml/h
Temperature of coagulation solution (methanol): 2°C
Winding rate: 99.5 m/min
Stretching magnification: 4.52 times
Drying temperature: 80°C
Air gap length: 5 mm

### (Spider silk fibroin woven fabric)

A plurality of the monofilaments obtained as described above was bundled to 180 deniers to obtain a Z-twisted silk. 360 deniers of twisted silks were obtained by using the two twisted silks. A woven fabric having a thickness of 0.2 mm (plain weave, basis weight = 30 m/m) was prepared by using the twisted silk.

### (Thermoplastic polyurethane film)

Thermoplastic polyurethane ("1180A" of "elastomer" (international registered trademark) manufactured by BASF Japan Ltd.) was extrusion-formed to prepare a film having a thickness of 0.2 mm. The film was cut into 100 mm × 100 mm to obtain a raw material for composition. The tensile elongation of the thermoplastic polyurethane film was 320%.

### (Composition)

Lamination was performed in an order of film-woven fabric-film-woven fabric by using two woven fabrics and thermoplastic polyurethane films prepared as described above. The laminate was heated and pressurized at 180°C and tightly adhered by using a press machine ("CTA1-100" manufactured by Yamamoto Eng. Works Co., Ltd.), and then radiantly cooled. The resultant product was cut into 100 mm × 25 mm to obtain a test piece having a thickness of 0.6 mm and 15% of Vf (fiber volume content) (refer to composite material 100B of Fig. 3).

A tensile test was performed on the test piece using an autograph ("AG-20kNX" manufactured by Shimadzu Corporation), and stress strain characteristic was measured.

A distance between marked lines in the tensile test was 80 mm, and the test rate was 100 mm/min.

### (Comparative Example 1)

In addition, for comparison, a sheet having a thickness of 0.6 mm was prepared by extrusion-forming thermoplastic polyurethane in the same manner as that of Example. The resultant product was cut into 100 mm × 25 mm to obtain a test piece. That is, the test piece according to Comparative Example 1 is a test piece only of thermoplastic polyurethane. Measurement of stress strain characteristic was performed in the same manner as that of Example.

### (Comparative Example 2)

In addition, for comparison, a test piece having a thickness of 0.6 mm and 15% of Vf was prepared by performing composition in the same manner as that of Example, using a thermoplastic polyurethane film and a silk woven fabric ("TH241 "/satin weave manufactured by Arai Co., Ltd.) in the same manner as that of Example. That is, the test piece according to Comparative Example 2 is a composite material made of a silk woven fabric and thermoplastic polyurethane. Measurement of stress strain characteristic was performed in the same manner as that of Example.

### (Test result)

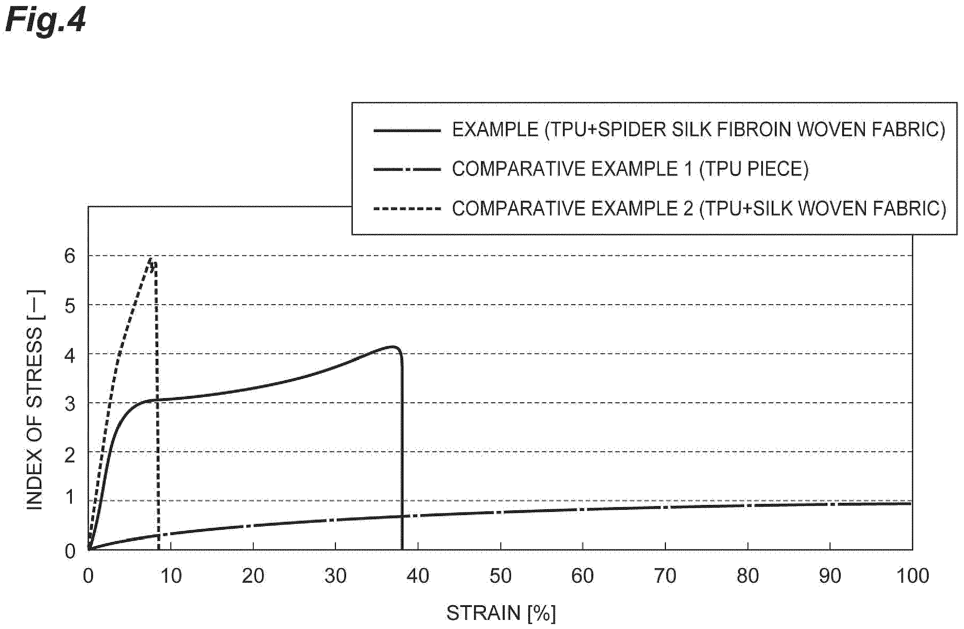

As a result of tensile test, stress strain characteristics illustrated in Fig. 4 was obtained regarding Examples, Comparative Example 1, and Comparative Example 2. In Fig. 4, the vertical axis is indicated as an index of stress at which a maximum value of stress was 1 in Comparative Example 1 (thermoplastic polyurethane only). As illustrated in Fig. 4, it was recognized that the waveform of Example had a shape close to a desirable rectangle as an impact absorption member compared to the waveforms of Comparative Examples 1 and 2.

That is, stress of the vertical axis corresponds to damage applied to a collision object, strain of the horizontal axis corresponds to stroke at the time of collision, and the area of the waveform (integrated value) corresponds to an energy absorption amount. In Example, the energy absorption amount became large compared to Comparative Examples 1 and 2. On the other hand, in Example, damage applied to a collision object became small compared to Comparative Example 2 and a stroke at the time of collision became small compared to Comparative Example 1. As an impact absorption member, although it is better that the energy absorption amount is large, it is desirable to suppress damage applied to the collision object, and it is desirable to absorb great impact with smaller stroke. In the composite material of Example, regarding stress, a maximum value of stress was approximately 4 times the maximum value of stress in Comparative Example 1, and regarding strain, strain at the breaking point was approximately 38%. It was recognized that the composite material of Example can exhibit a more desirable stress strain characteristic as an impact absorption member.

### Industrial Applicability

According to the present invention, it is possible to obtain a desirable stress strain characteristic as an impact absorption member.

### Reference Signs List

50...Synthetic resin film/sheet
60...Fabric
100...Composite material

### Sequence Listing

## Claims

1. A composite material obtained by laminating and tightly adhering a fabric containing fibers made of spider silk fibroin and a synthetic resin film/sheet having a tensile elongation equal to or greater than that of the fabric.

2. The composite material according to Claim 1,
wherein the synthetic resin film/sheet is made of thermoplastic polyurethane.

3. The composite material according to Claim 1 or 2,
wherein the fabric is a woven fabric.

4. A composite material manufacturing method comprising:
laminating a fabric containing fibers made of spider silk fibroin and a synthetic resin film/sheet having a tensile elongation equal to or greater than that of the fabric; and
tightly adhering the fabric and the synthetic resin film/sheet by heating and pressurizing a laminate thereof.

5. The composite material manufacturing method according to Claim 4,
wherein the synthetic resin film/sheet is made of thermoplastic polyurethane.

6. The composite material manufacturing method according to Claim 4 or 5,
wherein the fabric is a woven fabric.
